# EUROPEAN PATENT APPLICATION

(11) **EP 4 215 458 A1**
(43) Date of publication of application: **26.07.2023**
(21) Application number: 23152330.9
(22) Date of filing: 19.01.2023
(51) Int. Cl.: B65F 1/14

(54) **ARRANGEMENT AND METHOD FOR COLLECTING AND CRUSHING OF WASTE MATERIAL**

(30) Priority: 21.01.2022 FI 20225046
(71) Applicant: FF-Future Oy, 24100 Salo (FI)
(72) Inventor: NIEMINEN, Henri, 24130 Salo (FI)
(74) Representative: Berggren Oy

(57) **Abstract**

Arrangement and method for collecting and crushing waste material comprising foam plastic and/or foam insulation. The arrangement comprises a shipping container (1), a first apparatus (2) arranged into the shipping container for crushing waste material into smaller pieces, and a second apparatus (3) arranged into the shipping container for compressing crushed waste material. In the arrangement, the first apparatus (2) and the second apparatus (3) are arranged to move in the longitudinal direction of the shipping container (1), whereby the shipping container (1) is divided into three separate spaces (A, B, C) divided by the apparatuses, the volume of which spaces changes when the first apparatus (2) and/or the second apparatus (3) moves in the longitudinal direction of the shipping container.

## Description

### Field of the invention

The invention relates to an arrangement and a method according to the appended claims for collecting and crushing of waste material comprising foam plastic and/or foam insulation.

### Background of the invention

Foam plastic or foam insulation waste, such as polystyrene waste, is produced at construction sites as surplus or wasted parts. Foam insulation or foam plastic is used also to protect electrical devices and other products. Most of this waste material comprising foam plastic and/or foam insulation ends in mixed waste or energy waste, and thus, to waste incineration plants to be burned. However, foam insulation and foam plastic waste could be recycled and used as raw material for new products. The big size of the waste material is a challenge for recycling, whereby waste material pieces take a lot of space and thus quickly fill up the waste containers. Recycling of waste comprising foam insulation and/or foam plastic requires short emptying frequency, and the waste material also takes a lot of space when transported.

### Object and description of the invention

The object of the present invention is to disclose an arrangement and a method which eliminate problems of the prior art.

The object of the invention is to disclose an arrangement and a method for collecting and crushing waste material comprising foam plastic and/or foam insulation which enhance the collection and transportation of the waste material comprising foam plastic and/or foam insulation, and thus enables efficient recycling and utilisation of the waste material.

It is especially the object of the present invention to disclose an arrangement which can be moved by a truck, and into a shipping container of which arrangement foam insulation waste is collected and which shipping container comprises an apparatus for processing waste material.

To achieve this object, the arrangement and the method according to the invention are primarily characterised in what is presented in the characterising parts of the independent claim.

Some preferred embodiments of the invention are disclosed in the other, dependent claims.

A typical arrangement according to the invention for collecting and crushing waste material comprising foam plastic and/or foam insulation comprises
- a shipping container having a first end and a second end and a longitudinal direction between the ends,
- a first apparatus arranged into the shipping container for crushing the waste material into smaller pieces, and
- a second apparatus arranged into the shipping container for compressing the crushed waste material,
and in which arrangement the first apparatus and the second apparatus are arranged to move in the longitudinal direction of the shipping container, whereby the shipping container is divided into three separate spaces divided by the apparatuses, the volume of which spaces changes when the first apparatus and/or the second apparatus moves in the longitudinal direction of the shipping container.

In a typical method according to the invention, waste material comprising foam plastic and/or foam insulation is collected into the shipping container of the arrangement according to the invention, and the waste material is crushed with the first apparatus of the arrangement and transferred into the space between the first apparatus and the second apparatus, after which the crushed waste material is compressed with the second apparatus of the arrangement and transferred into the space between the second apparatus and the rear end of the shipping container.

The arrangement according to the invention is a so-called recycling container into which an apparatus for crushing and/or shredding the waste material comprising foam plastic and/or foam insulation, and an apparatus for compressing the crushed and/or shredded waste material more tight, have been arranged. This way, by means of the arrangement according to the invention, the waste material comprising foam plastic and/or foam insulation can be crushed into smaller pieces and/or crush, and also compressed more tight, whereby the volume of the waste material can be diminished and larger amount of waste material can thus be collected into the shipping container. The crushing and compressing of the collected waste material can be carried out in the shipping container as the waste material is loaded into the shipping container and/or when the shipping container is transported by a truck. Thus, the collected waste material is already crushed when it is brought to the waste material reprocessing site. The arrangement and method according to the invention thus facilitate the treatment and storage of the waste material comprising foam plastic and/or foam insulation also at the reprocessing site. The arrangement and method according to the invention enable an efficient way of collecting and treating of the waste material comprising foam plastic and/or foam insulation. The arrangement according to the invention is designed especially for treating waste material comprising foam plastic and/or foam insulation, which waste material is typically large in size and requires space.

The shipping container of the arrangement according to the invention can be transported from one place to another by a truck, whereby the arrangement according to the invention enables an easy and efficient collection of the waste material comprising foam plastic and/or foam insulation.

The arrangement according to the invention comprises two apparatuses in the shipping container which are arranged to move back and forth in the longitudinal direction of the shipping container. By means of these two apparatuses, separate spaces divided by the apparatuses can be formed into the shipping container, the volume of the spaces varying depending on how the first apparatus and the second apparatus are moved in the longitudinal direction of the shipping container. The first and the second apparatus of the arrangement according to the invention enable efficient filling of the shipping container.

### Short description of the drawings

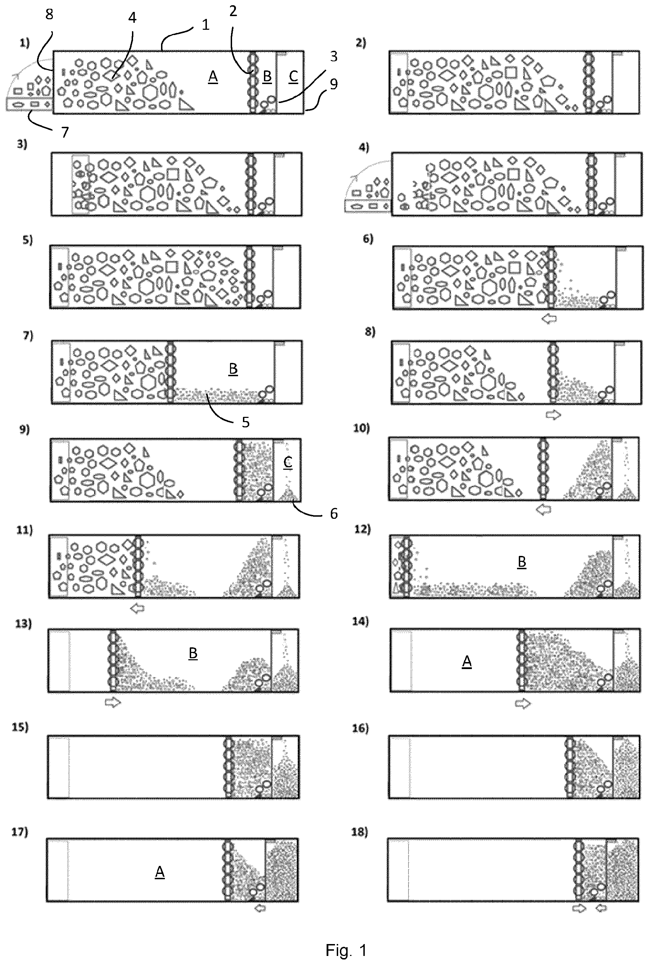

Fig. 1 shows by way of an example functioning of the arrangement according to the invention for collecting and crushing of waste material comprising foam plastic and/or foam insulation.

### Detailed description of the invention

The arrangement according to the invention comprises a shipping container into which waste material is collected and into which shipping container a first apparatus and a second apparatus are arranged for treating the waste material. Typically, the shipping container has walls, a roof and a floor. In a typical embodiment, the shipping container has fixed walls and a fixed roof. The shipping container has a first end and a second end as well as a longitudinal direction between the ends. In a shipping container according to an embodiment of the invention, there is a door/doors and/or loading means at least at the one end of the shipping container for loading the waste material inside the shipping container, whereby this end is the loading end of the shipping container. The opposite end of the shipping container is the rear end of the shipping container. In an embodiment of the invention, the loading end of the shipping container has a tipping platform or the like structure, by means of which the waste material is loaded inside the container. In an arrangement according to an embodiment of the invention, there is a door/doors or the like at the rear end of the shipping container to enable emptying the crushed and compressed waste material from the shipping container. In a typical embodiment according to the invention, the treated waste material can be tipped out of the shipping container. In an embodiment of the invention, the first end and/or the second end of the shipping container is partly or all open, whereby they comprise separate doors or hatches.

In an advantageous embodiment of the invention, the shipping container is for example a 40 feet container, that is a ISO container of 12 meters, the width of which is typically 8 feet (2.4 meters) and the most common height is 8.5 feet (2.6 meters). The shipping container used in an arrangement according to the invention can also be some other shipping container or the like structure suitable for the purpose. The sizing of the shipping container may vary. The shipping container is typically moved by a truck, and it can be transferred from one transport means to another. In an embodiment of the invention, the shipping container or the like structure can be built as a fixed part of the truck. In an arrangement according to the invention, the first apparatus and the second apparatus are arranged into the shipping container successively in the longitudinal direction of the shipping container. In an arrangement according to the invention, the first apparatus is arranged between the loading end of the shipping container and the second apparatus. In an arrangement according to the invention, the first and the second apparatus are arranged to move in the longitudinal direction of the shipping container. In an arrangement according to the invention, the shipping container is divided into three separate spaces divided by the apparatus, the volume of which spaces changes when the first apparatus and/or the second apparatus moves in the longitudinal direction of the shipping container.

In an arrangement according to an embodiment of the invention, the second apparatus, which has been arranged to compress the waste material crushed by the first apparatus, is arranged to move back and forth in the longitudinal direction of the shipping container. In an arrangement according to the invention, the waste material to be fed into shipping container is crushed by means of the first apparatus and transferred to the space in the shipping container between the first apparatus and the second apparatus. After this, the second apparatus of the arrangement compresses the crushed waste material and transfers it to the space between the second apparatus and the rear end of the shipping container. The second apparatus can move in the longitudinal direction of the shipping container, whereby the space between the first apparatus and the second apparatus as well as the space between the second apparatus and the rear end of the shipping container changes when the second apparatus moves. There are thus two spaces in the shipping container, the volume of which changes when the second apparatus moves in the longitudinal direction of the shipping container. Moving of the second apparatus that compresses waste material enables to largen the space for the compressed waste material in the rear end of the shipping container as the compressing proceeds. The first apparatus of the arrangement according to the invention crushes the waste material typically as it is fed into the shipping container.

In the arrangement according to the invention, the first apparatus and the second apparatus are arranged to move in the longitudinal direction of the shipping container, typically to move back and forth in the longitudinal direction of the shipping container, whereby the shipping container is divided into three separate spaces divided by the apparatuses, the volume of which spaces changes when the first apparatus and/or the second apparatus moves in the longitudinal direction of the shipping container. The first space is a space which is limited by the loading end of the shipping container and the first apparatus, the second space is a space which is limited by the first apparatus and the second apparatus, and the third space is a space which is limited by the second apparatus and the rear end of the shipping container. The first apparatus is arranged to move in the shipping container, whereby the first apparatus can be arranged into the rear part of the shipping container as waste material is being loaded into the shipping container, whereby waste material fits into the shipping container. After this, the first apparatus starts to move towards the loading end of the shipping container crushing simultaneously the waste material and transferring it into the space between the first and the second apparatus. This way, the shipping container can be loaded, and the waste material treatment can be continued after the loading phase. This way, the waste material can be quickly loaded into the shipping container, and the waste material treatment can be carried out simultaneously as the shipping container is being transported by a truck. Furthermore, crushing of the waste material comprising foam plastic and/or foam insulation is usually a faster phase than the compressing performed by the second apparatus. Thus, it is advantageous that both apparatuses move and the spaces which are divided by the apparatuses in the shipping container change according to the situation. The first apparatus of the arrangement according to the invention is arranged to crush and/or to chop the waste material comprising foam plastic and/or foam insulation into smaller pieces. In this application, the crushing means any crushing and/or cutting method by means of which waste material is processed into smaller pieces. Furthermore, the first apparatus is arranged to guide the crushed waste material into the space in the shipping container between the first apparatus and the second apparatus. This way, the crushed waste material is transferred forward in the longitudinal direction of the shipping container to the next space towards the rear end of the shipping container. In a typical embodiment of the invention, the first apparatus comprises the crushing and/or cutting means. The first apparatus may comprise one or several crushing and/or cutting means arranged into the apparatus. The crushing and the cutting means can be any means suitable for the purpose.

As the waste material is guided through the crushing and/or cutting means, the crushed waste material is transferred forward in the longitudinal direction into the space between the first apparatus and the second apparatus. In an arrangement according to an embodiment of the invention, the first apparatus is arranged to crush and/or chop waste material comprising foam plastic and/or foam insulation into pieces of 1-10 cm, preferably 1-5 cm or 1-4 cm, and to guide the crushed waste material into the space between the first apparatus and the second apparatus. The size of the waste material pieces is 1-10 cm, preferably 1-5 cm or 1-4 cm, which is advantageous when utilizing the waste material in further processing.

The second apparatus of the arrangement according to the invention is arranged to compress the waste material crushed by the first apparatus and to guide the crushed waste material crush into the space between the second apparatus and the rear end of the container. In a typical embodiment according to the invention, the second apparatus comprises the compressing means. The compressing means can be any means suitable for the purpose by means of which the crushed waste material pieces can be flattened and thus the volume of the waste material comprising foam plastic and/or foam insulation can be further diminished. In an exemplary embodiment, the second apparatus may comprise moving rollers and/or cogwheels as compressing means. The second apparatus may comprise one or several compressing means arranged into the apparatus.

In an arrangement according to the invention, the first apparatus and the second apparatus is arranged to move in the longitudinal direction of the shipping container. Typically, the first apparatus and/or the second apparatus is arranged to move back and forth in the longitudinal direction of the shipping container. In an advantageous embodiment of the invention, the first apparatus and the second apparatus are arranged to move back and forth in the longitudinal direction of the container, i.e., in both directions in the distance between the loading end and the rear end of the container. Typically, the first apparatus and/or the second apparatus is arranged to move substantially along the entire length of the shipping container, considering that they are arranged successively in the longitudinal direction of the shipping container. In an arrangement according to an advantageous embodiment of the invention, the first apparatus and the second apparatus are arranged to move in relation to each other. In an arrangement according to the invention, the first apparatus and the second apparatus are arranged to move separately or in a synchronized manner with each other. The apparatuses may move at different times or simultaneously. The arrangement according to the invention further comprises necessary actuators and a control system relating to the functioning and controlling of the first apparatus and the second apparatus.

In an arrangement according to the invention, the first apparatus and the second apparatus delimit three separate spaces in the shipping container. In an embodiment according to the invention, the first apparatus and the second apparatus are formed so that their height corresponds substantially to the height of the shipping container. In a typical embodiment according to the invention, the first apparatus and the second apparatus are arranged in the height direction of the shipping container to extend from the floor of the shipping container to the roof of the shipping container, or the apparatuses comprise arrangements that delimit the spaces between the apparatuses in the shipping container.

In an advantageous embodiment of the invention, when the shipping container is empty, the first apparatus and the second apparatus are arranged at the rear part of the container close to the rear end in the longitudinal direction of the shipping container. When the front part of the shipping container is filled with waste material comprising foam plastic and/or foam insulation, the first apparatus is actuated, whereby it starts to move towards the loading end of the shipping container, and crushes the waste material into smaller pieces, and simultaneously, transfers the crushed waste material, i.e., the waste material crush, to the other side of the first apparatus. This way, the waste material that has been crushed and/or chopped into smaller pieces is arranged to the space between the first apparatus and the second apparatus in the shipping container. The first apparatus can also move toward the rear end of the shipping container, whereby by means of it the crushed waste material can be pushed closer to the second apparatus, i.e., the compressing means, and the space between the first and the second apparatus can be filled in more tight. The first apparatus can move to both directions in the longitudinal direction of the shipping container during the waste material treatment. The second apparatus typically actuates when a sufficient amount of crushed waste material is accumulated into the space between the first apparatus and the second apparatus, the second apparatus flattens the crushed waste material crush and transfers it to the rear part of the shipping container into the space between the second apparatus and the rear end of the container. When this space starts to fill in, the second apparatus can move towards the loading end of the shipping container thus making more room for the tightened/flattened waste material crush. The second apparatus can also move towards the rear end, whereby the waste material crush flattened by means of it can be pushed more tight towards the rear end of the shipping container. When the shipping container is full of crushed and flattened waste material crush, the first apparatus and the second apparatus are typically close to the loading end of the shipping container.

By means of the arrangement according to the invention, the waste material comprising foam plastic and/or foam insulation can be collected and, at the same time, formed into a smaller space. Typically, when loaded, the shipping container fits in about 5-10 kg/m³ of waste material comprising foam plastic and/or foam insulation. When the waste material in question has been crushed and/or chopped with the first apparatus of the arrangement according to the invention, there is typically about 10- 30 kg/m³ of waste material crush in the second space. When the waste material crush is yet compressed, that is flattened, by means of the second apparatus of the arrangement, there is typically 100 - 200 kg/m³ of waste material in the third space of the rear part of the shipping container.

In the method according to the invention, the waste material comprising foam plastic and/or foam insulation is treated with the arrangement according to the invention. In a typical method according to the invention, the waste material comprising foam plastic and/or foam insulation is guided inside the shipping container from the loading end of the shipping container. At the loading end of the shipping container, there can be for example a tipping platform to facilitate the loading of the waste material into the shipping container. For example, a shipping container of 40 feet has a total volume of about 75 m³, typically, when the shipping container is empty, over 60 m³ of which volume is for loadable waste material, which takes a lot of space (about 5-10 kg/m³). According to an advantageous embodiment of the invention, after the shipping container has been filled with waste material, the first apparatus of the arrangement according to the invention can be actuated. The first apparatus travels from the rear part of the shipping container towards the loading end of the shipping container crushing and/or chopping the waste material into smaller pieces. Optionally, waste material is crushed as it is loaded to the shipping container. The first apparatus crushes and/or chops the waste material comprising foam plastic and/or foam insulation typically into pieces of 1 - 10 cm, or preferably 1 - 5 cm or 1 - 4 cm, whereby the volume of the crushed waste material is about 10 - 20 kg/m³. The first apparatus can occasionally change direction and transfer the crushed waste material towards the second apparatus, and return again to crush/chop the waste material loaded into the shipping container. The second apparatus of the arrangement according to the invention activates and starts to flatten/compress the crushed waste material when waste material crush is accumulated into the space between the first apparatus and the second apparatus. After the waste material crush has travelled through the second apparatus, flattened chips, thickness of which is typically about 0,1 - 0,5 cm and the volume about 100 -150 kg/m³, are formed. When all the waste material has been crushed and/or chopped, the first apparatus stops its actuation. However, the first apparatus can also be used to transfer the crushed waste material towards the second apparatus, that is the compressor. The second apparatus continues its constant actuation with its own capacity as long as all the crushed foam insulation waste is compressed.

The crushing and compressing of the waste material loaded into the shipping container can be carried out in the shipping container as the waste material is loaded into the shipping container and/or as the shipping container is transported by a truck.

The method and arrangement according to the invention is especially used for collecting and treating of waste material comprising foam plastic and/or foam insulation. The arrangement according to the invention suits for treating all types of foam plastic and/or foam insulation waste. The waste material comprising foam plastic and/or foam insulation refers to for example foam insulation material used in construction, such as insulation sheets manufactured of expanded polystyrene (EPS) and extruded polystyrene (XPS), but also different polyethylene and polypropylene foam material and polyurethane material suit to be treated with the arrangement and the method according to the invention. Also foam plastics and foam insulations that are used for protecting electrical devices and other products can be collected and crushed. The arrangement and method according to the invention enables for example an efficient and easy collection of surplus or wasted parts at constructions sites.

### Detailed description of the Figures

Figure 1 illustrates in phases the functioning of the arrangement according to the invention for collecting and treating of foam insulation waste. Figure 1 shows stages 1) - 18) which illustrate the operating principle of the arrangement. The arrangement illustrated in the Figures comprises a shipping container 1, a first apparatus 2 arranged into the shipping container for crushing waste material 4 comprising foam plastic and/or foam insulation into smaller pieces, and a second apparatus 3 arranged into the shipping container for compressing the crushed waste material into flattened chips 6. The shipping container 1 has a first end 8, which is a so-called loading end, and a second end 9, that is a rear end, as well as a longitudinal direction between the ends. In the embodiment shown in Figure 1, the first apparatus 2 and the second apparatus 3 are arranged to move to both directions in the longitudinal direction of the shipping container. The first apparatus 2 and the second apparatus 3 are arranged successively in the longitudinal direction of the shipping container. There can be doors and/or a tipping platform 7 at the loading end 8 of the shipping container, as is shown in stage 1) of the Figure 1. The first apparatus 2 and the second apparatus 3 divide the shipping container into three parts A, B, C in the longitudinal direction of the shipping container. The volume of these spaces A, B, C changes when the first apparatus 2 and/or the second apparatus 3 moves in the longitudinal direction of the shipping container.

In stages 1) - 5) of the Figure 1, the waste material 4 comprising foam plastic and/or foam insulation is guided inside the shipping container from the loading end 8 of the shipping container by means of the tipping platform 7. The foam insulation waste 4 is in the space A, which is formed between the loading end 8 of the shipping container 1 and the first apparatus 2. In the embodiment shown in Figure 1, the first apparatus 2 and the second apparatus 3 are typically arranged close to the read end 9 of the shipping container 1 when filling of an empty shipping container 1 is about to be filled in. The shipping container 1 can be filled until the space A is substantially full, as is shown in stage 5), alternatively, the functioning of the first apparatus 2 can be actuated as soon as there is waste material 4 in the space A. When the space A of the shipping container 1 has been filled in with waste material 4, the first apparatus 2 of the arrangement according to the invention can be actuated. In the stages 6) - 7) of the Figure 1, the first apparatus 2 travels from the rear part of the shipping container towards the loading end 8 of the shipping container crushing and/or chopping the waste material 4 into smaller pieces. The first apparatus 3 guides the crushed waste material 5 into the space B in the shipping container between the first apparatus 2 and the second apparatus 3. This way, the crushed waste material is transferred in the longitudinal direction of the shipping container forward to the next space towards the rear end wall of the shipping container 1. In the stages 8) - 9) of the Figure 1, it is illustrated that the first apparatus 2 can occasionally change direction and transfer the crushed waste material 5 towards the second apparatus 3. After this, the first apparatus 2 can return again to crush/chop the waste material 4 loaded into the shipping container, as is shown in stages 10) - 12), and again return to transfer the crushed waste material 5 towards the second apparatus 3, as in stages 13) - 16).

The second apparatus 3 of the arrangement according to the invention activates and starts to flatten/compress the crushed waste material 5 when waste material crush is accumulated into the space B between the first apparatus 2 and the second apparatus 3. In stage 9) of the Figure 1, the second apparatus 3 starts to compress the crushed waste material 5 at the same time when the first apparatus 2 transfers it closer to the second apparatus 3 in the shipping container. The second apparatus 3 continues its actuation as long as there is crushed waste material in the space B, stages 6) - 16) of the Figure 1. The second apparatus 3 transfers the compressed waste material crush, that is the flattened waste material chips 6, into the space C at the rear part of the shipping container 1. Typically, the first apparatus 2 and the second apparatus 3 continue to actuate as long as all the waste material in the container has been treated. When the space C of the shipping container is filled up with the flattened waste material chips 6, the first apparatus 2 and the second apparatus 3 move towards the loading end 8 of the shipping container in order to fit more flattened waste material chips into the space C (not shown in the figure). When all the foam insulation waste is crushed and/or chopped, the first apparatus 2 stops its actuation. The second apparatus 3 continues its constant actuation with its own capacity as long as all the crushed foam insulation waste has been compressed. In the Figure 1, at the stage 16, for example more waste material can be loaded into the shipping container, whereby the first apparatus 2 and the second apparatus 3 actuate again. The first apparatus 2 and the second apparatus 3 can carry out their actuation at the same time as the shipping container is being transported by a truck.

## Claims

1. Arrangement for collecting and crushing of waste material comprising foam plastic and/or foam insulation, **characterized in that** the arrangement comprises
- a shipping container (1) having a first end and a second end and a longitudinal direction between the ends,
- a first apparatus (2) arranged into the shipping container for crushing waste material into smaller pieces, and
- a second apparatus (3) arranged into the shipping container for
compressing the crushed waste material,
in which arrangement the first apparatus (2) and the second apparatus (3) are arranged to move in the longitudinal direction of the shipping container (1), whereby the shipping container (1) is divided into three separate spaces (A, B, C) divided by the apparatuses, the volume of which spaces changes when the first apparatus (2) and/or the second apparatus (3) moves in the longitudinal direction of the shipping container.

2. Arrangement according to claim 1, **characterized in that** the shipping container (1) comprises doors and/or loading means (7) at the second end of the container for guiding the waste material into the shipping container, whereby this end is the loading end of the shipping container.

3. Arrangement according to claim 1 or 2, **characterized in that** the first apparatus (2) comprises crushing and/or cutting means.

4. Arrangement according to any of the preceding claims, **characterized in that** the first apparatus (2) is arranged between the loading end of the shipping container and the second apparatus (3).

5. Arrangement according to any of the preceding claims, **characterized in that** the second apparatus (3) comprises compressing means.

6. Arrangement according to any of the preceding claims, **characterized in that** the first apparatus (2) is arranged to crush the waste material into pieces of 1-10 cm, preferably 1-15 cm or 1-4 cm, and to guide the crushed waste material into the space (B) between the first apparatus (2) and the second apparatus (3).

7. Arrangement according to any of the preceding claims, **characterized in that** the second apparatus (3) is arranged to compress the crushed waste material and to guide the compressed waste material crush into the space (A) between the second apparatus (3) and the rear end of the container.

8. Arrangement according to any of the preceding claims, **characterized in that** the first apparatus (2) and the second apparatus (3) are arranged to move separately or in a synchronized manner with each other.

9. Method for collecting and crushing of waste material comprising foam plastic and/or foam insulation, **characterised in that** in the method
- waste material is collected into the shipping container (1) of the arrangement according to any of the claims 1-8,
- the waste material is crushed by the first apparatus (2) of the arrangement, and moved into the space (B) between the first apparatus (2) and the second apparatus (3), and
- the crushed waste material is compressed with the second apparatus (3) of the arrangement and moved into the space (A) between the second apparatus (3) and the rear end of the shipping container.
